(19) **Europäisches Patentamt / European Patent Office / Office européen des brevets**

(11) **EP 1 281 104 B1**

(12) **FASCICULE DE BREVET EUROPEEN**

(45) Date de publication et mention
de la délivrance du brevet:
**07.03.2007 Bulletin 2007/10**

(21) Numéro de dépôt: **01934090.0**

(22) Date de dépôt: **11.05.2001**

(51) Int Cl.:
*G02F 1/139* (2006.01)

(86) Numéro de dépôt international:
**PCT/FR2001/001427**

(87) Numéro de publication internationale:
**WO 2001/086345 (15.11.2001 Gazette 2001/46)**

(54) **DISPOSITIF BISTABLE D'AFFICHAGE EN REFLEXION AVEC CONTRASTE INVERSE**

BISTABILE REFLEXIONSANZEIGEVORRICHTUNG MIT UMGEWANDELTEM KONTRAST

BISTABLE DEVICE FOR REFLECTION DISPLAY WITH INVERSE CONTRAST

(84) Etats contractants désignés:
**AT BE CH CY DE DK ES FI FR GB GR IE IT LI LU MC NL PT SE TR**

(30) Priorité: **12.05.2000 FR 0006105**

(43) Date de publication de la demande:
**05.02.2003 Bulletin 2003/06**

(73) Titulaire: **Nemoptic**
**78114 Magny-Les-Hameaux (FR)**

(72) Inventeurs:
• **DOZOV, Ivan, N.**
**F-91190 Gif-Sur-Yvette (FR)**
• **MARTINOT-LAGARDE, Philippe, R.**
**F-91460 Marcoussis (FR)**
• **STOENESCU, Daniel, N.**
**F-91400 Orsay (FR)**

(74) Mandataire: **Texier, Christian et al**
**Cabinet Régimbeau**
**20, rue de Chazelles**
**75847 Paris cedex 17 (FR)**

(56) Documents cités:
• **XIE Z -L ET AL: "REFLECTIVE BISTABLE TWISTED NEMATIC LIQUID CYRSTAL DISPLAY"** mai 1998 (1998-05) , JAPANESE JOURNAL OF APPLIED PHYSICS,PUBLICATION OFFICE JAPANESE JOURNAL OF APPLIED PHYSICS. TOKYO,JP, VOL. 37, NR. 5A, PAGE(S) 2572-2575 XP000965672 ISSN: 0021-4922 cité dans la demande abrégé; figures 1,2 * chapitre 3*
• **XIE Z L ET AL: "Optimization of reflective bistable twisted nematic liquid crystal displays"** , JOURNAL OF APPLIED PHYSICS, 1 SEPT. 1999, AIP, USA, VOL. 86, NR. 5, PAGE(S) 2373 - 2376 XP002156446 ISSN: 0021-8979 cité dans la demande * chapitre 3 *
• **ZHUANG Z ET AL: "OPTIMIZED CONFIGURATION FOR REFLECTIVE BISTABLE TWISTED NEMATIC DISPLAYS"** 30 août 1999 (1999-08-30) , APPLIED PHYSICS LETTERS, AMERICAN INSTITUTE OF PHYSICS. NEW YORK, US, VOL. 75, NR. 9, PAGE(S) 1225-1227 XP000868211 ISSN: 0003-6951 abrégé; tableau 1

## Description

La présente invention concerne le domaine des dispositifs d'affichage à cristal liquide.

ETAT DE LA TECHNIQUE

Les cristaux liquides sont couramment utilisés dans les dispositifs d'affichage. Dans les afficheurs nématiques, qui font l'objet préférentiel de la présente invention, on utilise un cristal liquide nématique, achiral ou chiralisé par exemple en ajoutant un dopant chiral. L'orientation et l'ancrage du cristal liquide à proximité des surfaces sont définis par des couches ou des traitements d'alignement appliqués sur les substrats. En absence de champ on impose de cette façon une texture nématique uniforme ou faiblement tordue.

La plupart des dispositifs proposés et réalisés à ce jour sont monostables. En absence de champ électrique, une seule texture est réalisée dans le dispositif. Elle correspond à un minimum absolu de l'énergie totale de la cellule. Sous champ cette texture est déformée continûment et ses propriétés optiques varient en fonction de la tension appliquée. A la coupure du champ, le nématique revient à nouveau dans la seule texture monostable.

Une autre classe d'afficheurs nématiques est celle des nématiques bistables, multistables ou métastables. Dans ce cas, au moins deux textures distinctes, stables ou métastables en absence de champ, peuvent être réalisées dans la cellule, avec les même ancrages sur les surfaces. On dénomme généralement « bistables » ou « multistables » au moins deux états de même énergie ou d'énergie très proche, susceptibles de durer quasi indéfiniment en l'absence de commande externe. Par contre on dénomme « métastables » des états de niveau d'énergie légèrement différents, susceptibles de commuter après un temps important de relaxation. La commutation entre les deux états est réalisée par l'application de signaux électriques appropriés. Une fois l'état inscrit, il reste mémorisé en absence du champ grâce à la bistabilité (ou métastabilité). Cette mémoire des afficheurs bistables est très attractive pour de nombreuses applications. D'un côté, elle permet un faible taux de rafraîchissement des images, très favorable pour diminuer la consommation des appareils portables. D'autre part, pour des applications rapides (par exemple vidéo) la mémoire assure un très fort taux de multiplexage, permettant un affichage vidéo de haute résolution.

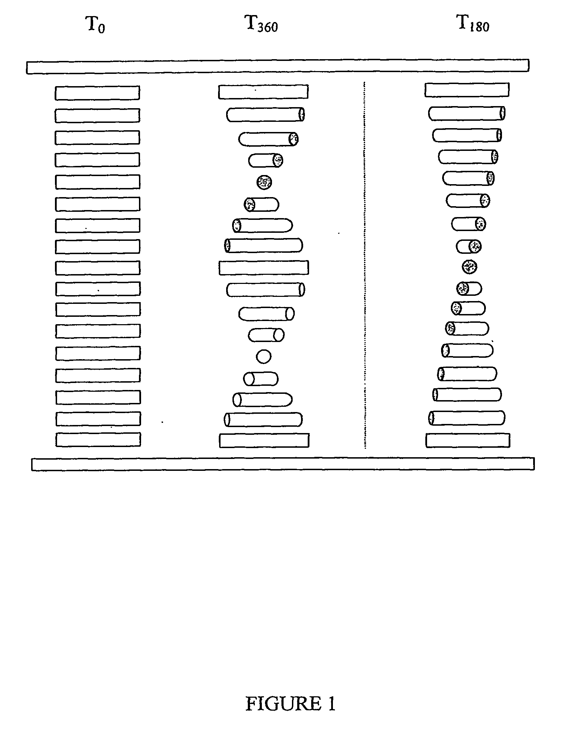

Un exemple typique d'afficheur bistable connu [document 1] est présenté schématiquement sur la Figure 1. Dans ce cas, une des textures bistable ($T_0$) est uniforme (ou, en général, faiblement tordue), tandis que l'autre ($T_{360}$) présente une torsion supplémentaire de $\pm 360°$. Le pas cholestérique spontané $p_0$ du matériau est choisi $p_0 \simeq 2.d$ (ou $d$ est l'épaisseur de la couche cristal liquide) pour rendre égales les énergies des deux états $T_0$ et $T_{360}$ topologiquement équivalents. Une troisième texture $T_{180}$, topologiquement différente des états $T_0$ et $T_{360}$, est aussi possible avec les mêmes ancrages et son énergie est plus basse, parce qu'elle est mieux adaptée à la torsion spontanée du matériau. Pourtant, en absence de champ, $T_0$ et $T_{360}$ restent stables et ne se transforment pas en $T_{180}$ à cause des contraintes topologiques. Sous champ électrique fort une quatrième texture presque homéotrope est réalisée, avec les molécules perpendiculaires aux substrats presque partout, sauf au voisinage des lames. Cette texture permet la commutation entre les textures métastables $T_0$ et $T_{360}$. Le choix de la texture finale est commandé par l'hydrodynamique lancée à la fin du signal de commande (effet backflow).

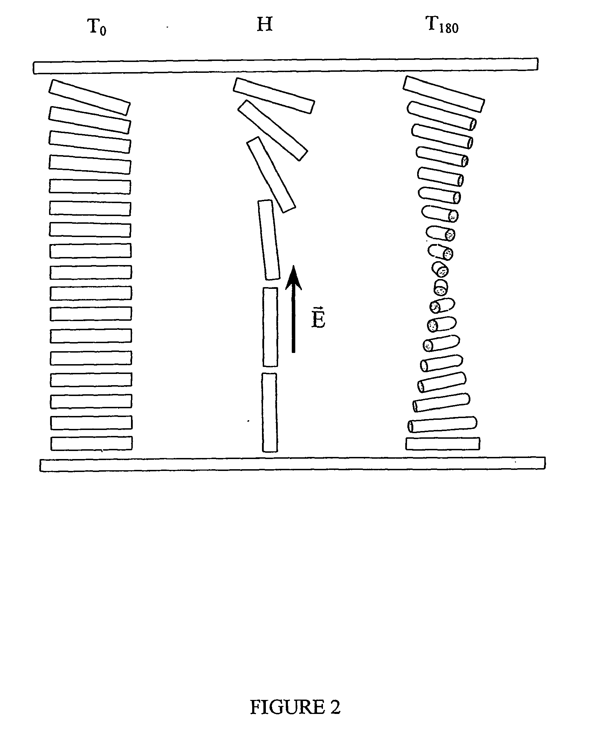

Un autre exemple d'un afficheur bistable connu [document 2] est présenté schématiquement sur la Figure 2. Les deux textures bistables, $T_0$ (uniforme ou faiblement tordue) et $T_{180}$, diffèrent entre elles d'une torsion de $\pm 180°$ et sont topologiquement incompatibles. Le pas spontané $p_0$ du nématique est choisi proche de 4 fois l'épaisseur $d$ de la cellule, soit $p_0 \simeq 4.d$ pour rendre les énergies de $T_0$ et $T_{180}$ sensiblement égales. Sans champ il n'existe aucun autre état avec une énergie plus basse: $T_0$ et $T_{180}$ présentent une vraie bistabilité. Sous fort champ une texture presque homéotrope (H) est obtenue, avec au moins un des ancrages sur les substrats *cassés :* les molécules sont normales à la lame au voisinage de cette surface. A la fin de l'impulsion de commande la cellule est guidée vers l'un ou l'autre des états bistables, selon que le couplage entre les mouvements des molécules près des deux surfaces est élastique ou hydrodynamique : le couplage élastique donne un retour vers l'état $T_0$, le couplage hydrodynamique vers l'état $T_{180}$.

Pour que l'information affichée sur le dispositif apparaisse, il est nécessaire que les textures réalisées aient des propriétés optiques différentes. La plupart des dispositifs travaillent en lumière polarisée et utilisent des éléments optiques supplémentaires: des polariseurs, des filtres, des lames compensatrices, etc. Ces éléments et leurs orientations par rapport aux ancrages sur les deux surfaces sont choisis en fonction de la configuration de l'afficheur, de façon à optimiser les performances optiques pertinentes : contraste, luminosité, colorimétrie, angle de vue, etc.

Pour les afficheurs monostables, l'optimisation doit porter sur tout un continuum d'états, réalisés sous champ plus ou moins fort, parce que ces états sont affichés pendant toute la durée d'une image. Un très grand nombre de géométries optiques ont été proposées et réalisées pour les dispositifs différents, en tenant compte des particularités de chacun de ces afficheurs. Pour chaque dispositif les configurations des éléments supplémentaires sont aussi adaptées selon leur utilisation en transmission ou en réflexion.

L'optique des deux types d'afficheurs bistables, mentionnés plus haut est très différente de celle des dispositifs monostables. D'abord, pendant la plupart de la durée d'une image, seulement deux textures sont réalisées dans chaque élément de l'afficheur : celles correspondant aux deux états bistables. La configuration optimale doit permettre un contraste maximal entre ces deux textures, tout en minimisant les effets optiques transitoires pendant la commutation, dûs au passage rapide par des états intermédiaires sous champ. D'autre part, la différence principale entre les deux textures bistables, la torsion supplémentaire de 180° ou de 360°, n'est pas un paramètre libre pour l'optimisation : elle est imposée par le mécanisme physique de la réalisation des deux états bistables. En plus, la commutation bistable nécessite un fort champ électrique (proche de 10 V/$\mu$m). La couche de cristal liquide doit donc être très fine ($d \approx 2 \div 3\mu$m) pour permettre la commande par des tensions raisonnables et l'optimisation optique doit tenir compte de ces impératifs.

Jusqu'à présent les dispositifs bistables ont été surtout discutés en mode transmission, pour lequel ils étaient originalement proposés.

Pourtant, la mémoire bistable est très utile en mode réflexion : l'afficheur bistable en réflexion peut garder et afficher une image pendant très longtemps sans aucune consommation d'énergie, ni pour son fonctionnement (il est bistable), ni pour son éclairage (il ne nécessite pas de source de lumière interne).

Récemment, certaines configurations particulières en réflexion ont été proposées pour les dispositifs bistables de différence de torsion de 360° [documents 3, 4 et 5]. Elles utilisent un seul polariseur parallèle au directeur nématique sur le substrat avant. L'état peu tordu $T_0$ a une torsion de 63,6° [document 3] et -36° [document 4]. Le contraste indiqué dans ces deux cas est inférieur à 10 en lumière blanche.

Les configurations proposées à ce jour pour les afficheurs bistables en réflexion travaillent en contraste «normal», avec l'état noir peu tordu ou uniforme ($T_0$) et l'état blanc fortement tordu ($T_{180}$ ou $T_{360}$). Cette configuration, assez simple à réaliser, peut théoriquement assurer un contraste d'environ 60 en lumière blanche. Pourtant, elle est très sensible aux variations de l'épaisseur d et de l'angle de torsion $\Delta\Phi$ de l'état $T_0$, inévitables pour des raisons technologiques.

## BASE DE L'INVENTION

La présente invention a maintenant pour but de proposer un nouveau dispositif d'affichage à base de cristaux liquides, qui présente des propriétés supérieures à celles des dispositifs antérieurs connus.

Ce but est atteint dans le cadre de la présente invention, grâce à un dispositif bistable d'affichage en réflexion caractérisé par le fait qu'il comprend :

a) un matériau cristal liquide contenu entre deux substrats parallèles, munis d'électrodes sur leurs surfaces intérieures en regard, pour permettre d'appliquer un champ électrique sur le dit cristal liquide, au moins le substrat frontal et l'électrode frontale étant optiquement transparents,

b) des couches ou des traitements d'alignement sur les électrodes, qui orientent le cristal liquide et permettent la réalisation alternative d'au moins deux textures distinctes stables ou métastables en absence de champ, où une des textures est soit non-tordue, soit tordue à un angle total compris entre -90° et +90°, et l'autre texture possible présente une torsion supplémentaire à gauche ou à droite d'un angle essentiellement multiple entier de 180°,

c) l'épaisseur $d$ de la couche de cristal liquide étant choisie telle que le produit $d.\Delta n$ est proche de $\lambda_0/4$, où $\lambda_0$ est la longueur d'onde médiane de la bande spectrale utile de l'afficheur et $\Delta n$ est la biréfringence du cristal liquide pour cette longueur d'onde,

d) des moyens conçus pour appliquer, sur le cristal liquide, des signaux électriques qui permettent de commuter entre les dites textures distinctes et de rester dans l'une d'entre-elles après l'enlèvement du champ,

e) un polariseur, associé à la face avant du dispositif (placé à l'intérieur ou à l'extérieur de celui-ci),

f) un élément réflectif, spéculaire ou diffusant, placé sur la face arrière du cristal liquide, à l'intérieur ou à l'extérieur du dispositif, permettant à la lumière de passer deux fois dans le dispositif et de retourner vers l'observateur ou vers des éléments optiques supplémentaires, et

g) un compensateur, placé entre le polariseur et l'élément réflectif, avec un retard optique $d_c\Delta n_c$ proche de $\lambda_0/4$.

L'afficheur bistable en réflexion ainsi proposé selon la présente invention offre de nombreux avantages.

Il utilise un contraste «inversé», avec l'état $T_0$ blanc et l'état fortement tordu $T_{180}$ ou $T_{360}$ noir. Avec un seul polariseur et avec une lame compensatrice introduisant un retard optique proche de $\lambda/4$, il permet des configurations, qui assurent un contraste de 50 à 60 en lumière blanche. Sans perte de qualité optique, une optimisation de ce dispositif permet aussi de diminuer l'épaisseur de la cellule, ce qui rend la commutation plus rapide et réduit les tensions de commande nécessaires pour la commutation. Grâce au contraste inversé, la qualité optique du dispositif reste très bonne même dans le cas de larges variations de $d$ et $\Delta\Phi$.

Selon d'autres caractéristiques de l'invention :

le matériau cristal liquide comprend un cristal liquide ou un mélange de cristal liquide dans une phase nématique,
. le matériau cristal liquide comprend un cristal liquide ou un mélange de cristal liquide dans une phase cholestérique ou nématique dopée par une substance chirale, pour permettre de rapprocher ou d'égaliser les énergies de certaines textures parmi les textures stables ou métastables,

. le cristal liquide, les couches d'alignement et les moyens conçus pour appliquer le champ sont choisis pour permettre la commutation sous champ par cassure d'ancrage ou par propagation des défauts entre deux textures, bistables ou métastables en absence de champ, et la différence des angles de torsion totale dans ces deux textures est essentiellement proche de 180°,

. le cristal liquide, les couches d'alignement et les moyens conçus pour appliquer le champ sont choisis pour permettre la commutation sous champ par cassure d'ancrage, par distorsion continue dans le volume ou par propagation des défauts entre deux textures, bistables ou métastables en absence de champ, et la différence des angles de torsion totale dans ces deux textures est essentiellement proche de 360°,

. la lame compensatrice est placée entre le polariseur et le cristal liquide,

. la lame compensatrice est placée entre le cristal liquide et l'élément réflectif,

. la lame compensatrice introduit un retard optique $\Delta l$ compris entre $0,15 \cdot \lambda_0 \div 0,35 \cdot \lambda_0$, où $\lambda_0$ est la longueur d'onde médiane de la bande spectrale utile,

. la lame compensatrice est orientée à un angle compris entre 35° et 55° par rapport au polariseur,

. la lame compensatrice est orientée à un angle proche de 45° par rapport au polariseur,

. le retard optique $d \Delta n$ de la couche cristal liquide est dans les limites $0,15 \cdot \lambda_0 \div 0,35 \cdot \lambda_0$, préférentiellement $0,20 \cdot \lambda_0 \div 0,32 \cdot \lambda_0$, où $\lambda_0$ est la longueur d'onde médiane de la bande spectrale utile,

. le polariseur est un polariseur linéaire ou elliptique,

. au moins une des électrodes contient plusieurs segments différents pour permettre de réaliser plusieurs éléments d'image (pixels) indépendants sur les mêmes substrats et dans le même dispositif,

. les éléments d'image (pixels) indépendants sont munis des moyens indépendants pour appliquer le champ,

. les éléments d'image (pixels) indépendants sont organisés dans une matrice passive multiplexée,

. les éléments d'image (pixels) indépendants sont organisés dans une matrice active multiplexée,

. le polariseur est orienté à un angle proche de 45° par rapport au directeur du cristal liquide sur la face avant du dispositif,

. le dispositif est optimisé, quant à l'angle de torsion de la texture dans l'état de faible torsion, la torsion supplémentaire $\pm m\pi$ dans le deuxième état bistable (où m est un nombre entier), l'orientation du polariseur par rapport à l'alignement du cristal liquide sur la face avant, l'épaisseur du matériau cristal liquide placé entre les deux substrats et la biréfringence du cristal liquide de façon à obtenir des performances optiques optimales, notamment contraste, luminance, colorimétrie,

. l'axe optique de la lame compensatrice est orienté sensiblement à 45° par rapport au polariseur,

. la lame compensatrice introduit un retard optique compris entre 100 nm et 180 nm,

. le polariseur est combiné avec la lame compensatrice sous forme d'un élément unique pour réaliser un polariseur elliptique, et

l'épaisseur du matériau cristal liquide est inférieure à 6 $\mu$m.

D'autres caractéristiques, buts et avantages de la présente invention apparaîtront à la lecture de la description détaillée qui va suivre, et en regard des dessins annexés, donnés à titre d'exemples non limitatif, et sur lesquels :

- la figure 1 précédemment décrite représente schématiquement les trois états susceptibles d'être obtenus avec un afficheur conforme à un premier mode de réalisation de l'état de la technique,
- la figure 2 également précédemment décrite représente schématiquement les trois états susceptibles d'être obtenus avec un afficheur conforme à un deuxième mode de réalisation de l'état de la technique,
- la figure 3 représente une vue en perspective schématique d'une cellule conforme à la présente invention, et schématise l'aller et le retour de la lumière dans ce dispositif,
- la figure 4 représente une vue similaire et schématise les orientations des polariseur et lame compensatrice, ainsi que les directions d'alignement sur les substrats qui encadrent le cristal liquide,
- les figures 5 et 6 représentent différentes solutions d'équations, qui seront explicitées, par la suite, intervenant dans l'optimisation d'un dispositif conforme à la présente invention,
- les figures 7 et 8 représentent des variations de réflectivité, pour deux textures bistables,
- les figures 9 et 10 présentent les réflectivités de deux états bistables,
- la figure 11 présente les réflectivités des deux états bistables en contraste inversé, calculées en fonction de $\lambda_0/\lambda$,
- la figure 12 présente le contraste en lumière blanche pour une source standard, calculé pour un dispositif en contraste inversé, en fonction de l'épaisseur optique $d\Delta n$,
- la figure 13 présente le diagramme colorimétrique du dispositif proposé dans la présente invention, en fonction de l'épaisseur d du cristal liquide, et
- la figure 14 représente une variante de disposition de la lame compenatrice, conforme à la présente invention.

PARTIE DESCRIPTIVE

Comme les autres afficheurs en réflexion, les dispositifs bistables peuvent être réalisés en de nombreuses configurations, avec un seul ou avec deux polariseurs, avec une ou plusieurs lames compensatrices, etc. Dans la présente invention le dispositif comprend un seul polariseur, placé sur le chemin de la lumière sur la face avant du dispositif. Cette configuration a l'important avantage d'une luminosité maximale, parce qu'elle minimise les pertes de lumière dues à un éventuel deuxième polariseur.

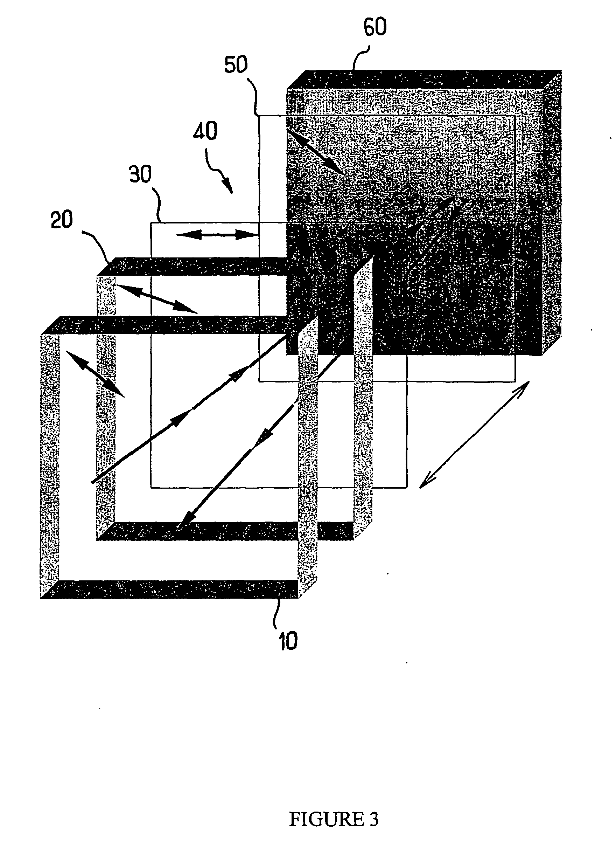

Le dispositif conforme à la présente invention comprend, comme illustré sur la figure 3, une couche de cristal liquide 40, de préférence nématique, d'épaisseur d, placée entre deux substrats 30, 50, un polariseur 10 en face avant, un miroir 60 en face arrière de la couche cristal liquide 40 et une lame compensatrice 20.

La lame compensatrice 20 est placée entre le polariseur 10 et le réflecteur 60. Selon le mode de réalisation particulier illustré sur la figure 3, la lame compensatrice 20 est placée en avant du substrat frontal 30.

L'axe optique de la lame compensatrice 20 est orienté à ~45° par rapport au polariseur 10. La différence de chemin optique introduite par le compensateur 20 en un seul passage de la lumière à travers lui est $d_c \Delta n_c$, où de est son épaisseur et $\Delta n_c$, sa biréfringence (positive ou négative). Le déphasage angulaire correspondant est défini par $\delta = 2\pi d_c \Delta n_c / \lambda$ où $\lambda$ est la longueur d'onde de la lumière.

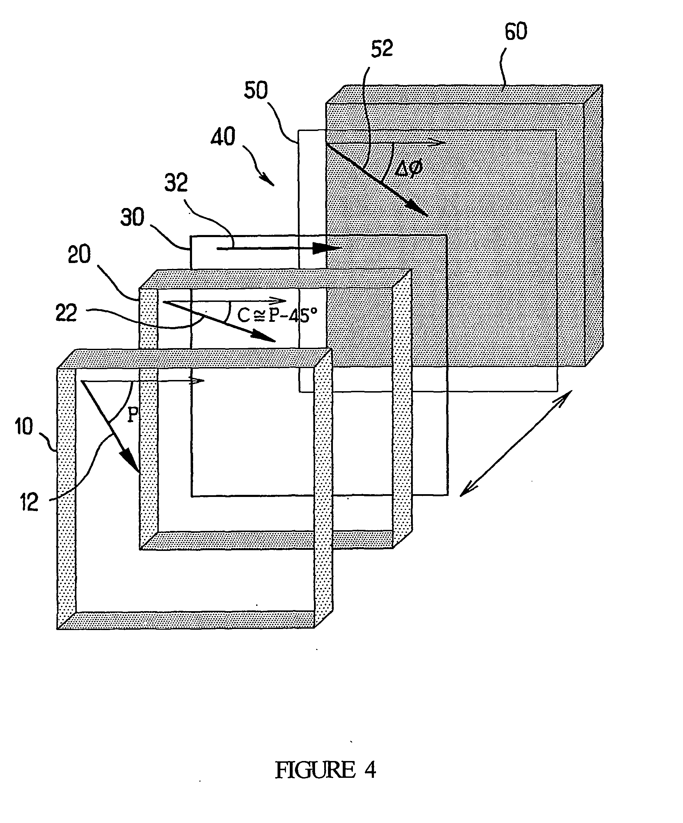

Sur la figure 4, l'orientation du polariseur 10 est référencée 12, l'orientation de la lame compensatrice 20 est référencée 22 et les directions d'alignement définies respectivement sur chacun des deux substrats 30, 50 sont référencées 32 et 52.

Dans le cadre de la présente invention, on choisit $\delta \cong 90°$ (i.e. $\pi/2$ radians) et pour l'optimisation l'on peut faire varier tous les paramètres qui définissent les propriétés optiques de l'afficheur: l'angle de torsion $\Delta\Phi_0$ de la texture dans l'état de faible torsion ($|\Delta\Phi_0| \leq 180°$), la torsion supplémentaire $\pm m\pi$ dans le deuxième état bistable (où $m$ est un nombre entier), l'orientation P du polariseur par rapport à l'alignement du cristal liquide sur la face avant (-90°$\leq P \leq$90°), l'épaisseur d et la biréfringence $\Delta n$ du cristal liquide.

Ces paramètres seront choisis de façon à obtenir des performances optiques optimales du dispositif, notamment son contraste, sa luminance, sa colorimétrie, etc.

Une particularité des afficheurs bistables est le fait que la plupart du temps seulement deux états sont réalisés et donc seulement ces deux états bistables doivent être optimisés optiquement.

On va démontrer que en général, pour n'importe quelle orientation $P$ du polariseur 10, plusieurs solutions vont donner des performances optiques optimales. Le choix entre ces solutions va permettre d'optimiser aussi la commutation du cristal liquide, par exemple en diminuant l'épaisseur d de la couche 40, sans perte de qualité optique.

En effet, les dispositifs bistables nécessitent l'application d'un champ électrique $E$ fort, proche de 10 V/$\mu$m. Les tensions de commande $U = d\,E$ sont donc assez élevées par rapport aux afficheurs traditionnels. Une diminution de l'épaisseur permet de baisser $U$ du même facteur.

Les temps optiques de relaxation après la commutation, proportionnels à $d^2$, sont aussi favorablement raccourcis à faible $d$, ce qui est très important pour des applications rapides, par exemple pour l'affichage vidéo.

Finalement, la commutation des nématiques bistables est commandée par les écoulements de cisaillement, lancés à la fin de l'impulsion de commande. Une épaisseur faible du cristal liquide renforce le couplage hydrodynamique des différents écoulements et donc favorise une commande plus efficace de l'afficheur.

L'homme de l'art comprendra l'importance de la configuration optimale présentée dans cette invention: elle permet d'améliorer à la fois la qualité optique, la rapidité, la tension de commande et la commutation du dispositif entre les états bistables.

Pour comprendre l'importance du cas $|\delta| \cong 90°$ il faut analyser d'abord qualitativement le comportement optique des deux textures bistables sans compensateur. La texture faiblement tordue $T_0$ est optiquement proche d'une lame biréfringente orientée à 45° par rapport au polariseur et avec un retard optique $d.\Delta n \cong \lambda/4$. La combinaison polariseur linéaire - lame $\lambda/4$ (i.e. le cristal liquide) forme alors un polariseur circulaire. La lumière qui arrive sur le miroir polarisé circulairement change après la réflexion son signe de rotation et au deuxième passage est coupée par le polariseur circulaire - l'état de faible torsion paraît noir en réflexion. L'état de forte torsion ($\Delta\Phi \pm m\pi$) est optiquement presque isotrope et la lumière arrivant sur le miroir est presque polarisée linéairement (ou d'une très faible ellipticité). Après réflexion et second passage par le cristal liquide, la lumière sort sans perte à travers le polariseur, l'état clair est réalisé.

Quand un compensateur $\lambda/4$ est superposé à l'état faiblement tordu (avec l'axe lent du compensateur perpendiculaire à l'axe lent du cristal liquide) la biréfringence totale devient nulle et cet état devient clair. Par contre, la biréfringence de l'état fortement tordu étant négligeable, en présence du compensateur $\lambda/4$ on retrouve le cas du polariseur circulaire et donc un état noir. Le compensateur $\lambda/4$ sert donc à inverser le contraste du dispositif. Les états "blanc" et "noir" sont interchangés.

L'inversion du contraste par une lame compensatrice peut être avantageuse. D'abord, même pour un afficheur monostable, le contraste normal ou inversé peut être préférable selon l'application, pour des raisons technologiques (facilité de réalisation), esthétiques ou ergonomiques (confort visuel, etc.).

Pour les dispositifs bistables qui font l'objet de la présente invention, le contraste inversé donne deux avantages supplémentaires importants.

Une particularité des afficheurs bistables est le fait que pendant la commutation entre les deux états, sous fort champ, une texture "parasite" inévitable est réalisée, presque homéotrope, pareille en apparence à l'état fortement tordu. En contraste normal, l'état parasite est blanc et perturbe fortement l'état des pixels noirs, en diminuant sensiblement le contraste moyen. En contraste inversé cet état homéotrope est noir, il diminue, mais très faiblement, la luminosité moyenne du dispositif.

Une autre particularité des afficheurs bistables est leur faible épaisseur ($d \cong 1 \div 3\ \mu$m) et la forte torsion dans un de leurs états ($\Delta\Phi \pm m\pi$, dans cet état le pas de l'hélice est 2 à 3 $\mu$m). Technologiquement, il est difficile d'ajuster l'épaisseur globale ou locale avec une tolérance meilleure que $\pm 0,1\ \mu$m. Il faut donc tenir compte de l'écart de l'épaisseur optique réelle du cristal liquide par rapport à la valeur "idéale" pour laquelle la cellule à été optimisée. Aussi, à cause de la grande torsion, les couples azimutaux appliqués sur les ancrages sont élevés. Ils peuvent donner une variation (globale ou locale) de $\Delta\Phi$ par rapport à sa valeur optimale. La variation de d et $\Delta\Phi$ change sensiblement les propriétés optiques de l'état biréfringent faiblement tordu. Par contre, l'optique de l'état de forte torsion dépend très peu de *d* et $\Delta\Phi$. En contraste inversé, l'afficheur va présenter un bon contraste et une très bonne uniformité, malgré les déviations de *d* et $\Delta\Phi$.

Pour une texture uniformément tordue, dont le pas d'hélice est nettement plus grand que la longueur d'onde de la lumière, quand la propagation est parallèle à l'axe de l'hélice, il existe des formules analytiques bien connues [document 6] qui décrivent avec une bonne approximation les propriétés optiques du système.

Nous allons d'abord envisager le cas d'un compensateur 20 placé entre le polariseur 10 et le cristal liquide 30/40/50, orienté à 45° par rapport au directeur sur la face avant (tel qu'illustré sur la figure 3).

En tenant compte du double passage de la lumière dans le dispositif nous obtenons la formule générale de la réflexion d'une texture tordue à un angle $\Delta\Phi$:

$$R(\Delta\Phi) = \left[\cos(\varepsilon)\cos(\delta) - \sin(\varepsilon)\sin(\delta)\sin(2P-\alpha)\right]^2 + \sin^2(\varepsilon)\cos^2(2P-\alpha) \quad (1)$$

où

$$\sin\left(\frac{\varepsilon}{2}\right) = \frac{\pi\xi}{\sqrt{\Delta\Phi^2 + \pi^2\xi^2}}\sin\left(\sqrt{\Delta\Phi^2 + \pi^2\xi^2}\right) \qquad (2.a)$$

$$\tan(\alpha) = \frac{\Delta\Phi}{\sqrt{\Delta\Phi^2 + \pi^2\xi^2}}\tan\left(\sqrt{\Delta\Phi^2 + \pi^2\xi^2}\right) \qquad (2.b)$$

$$\xi = \frac{d \cdot \Delta n}{\lambda} \qquad (2.c)$$

$\varepsilon$ et $\alpha$ sont des fonctions de la biréfringence intégrée du cristal liquide *d·$\Delta n$,* de la longueur d'onde de la lumière $\lambda$, de l'angle de torsion de l'état $\Delta\Phi$ et de l'orientation du polariseur 10.

En lumière monochromatique à une longueur d'onde $\lambda_0$ on peut toujours choisir $\delta(\lambda_0)=90°$. Dans ce cas l'équation (1) se simplifie à R($\Delta\Phi$)= $\sin^2\varepsilon$. Pour la texture faiblement tordue à angle $\Delta\Phi_0$ on demande R($\Delta\Phi_0$)=1, i.e.

$$\sqrt{\Delta\Phi_0^2 + \pi^2\xi^2} = \sqrt{2}\ \pi\xi\ \sin\left(\sqrt{\Delta\Phi_0^2 + \pi^2\xi^2}\right) \qquad (3.a)$$

tandis que pour la texture fortement tordue on exige R($\Delta\Phi \pm$m$\pi$)=0, i.e.

$$\sqrt{(\Delta\Phi_0 \pm m\pi)^2 + \pi^2 \xi^2} = k\pi \qquad\qquad (3.b)$$

ou $k$ et un nombre entier $k=0,1,2,\dots$ .

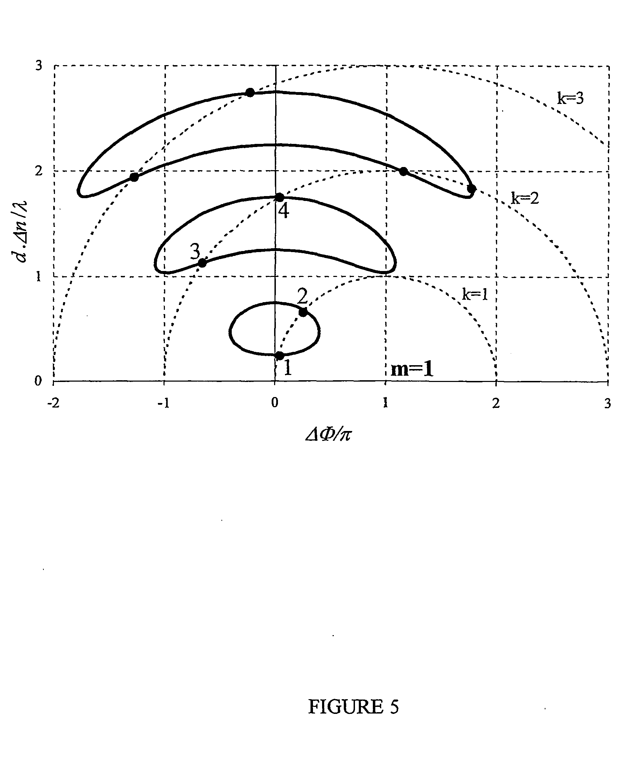

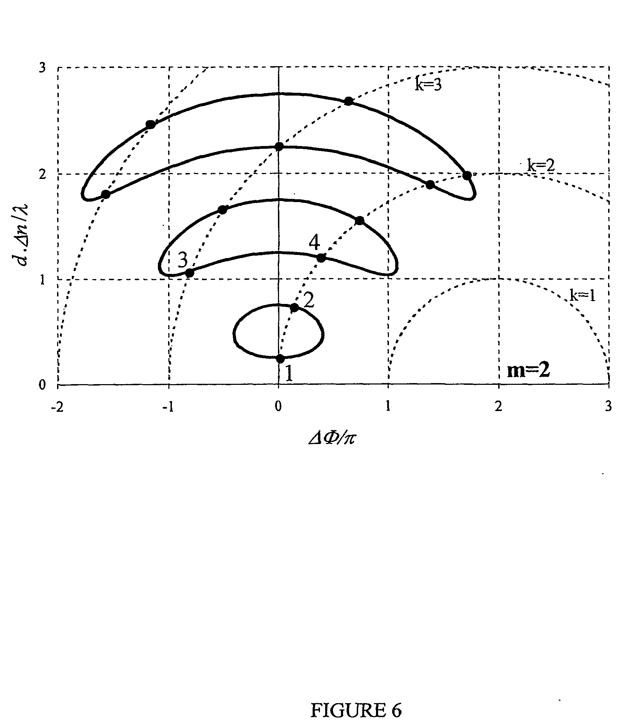

Les solutions simultanées des équations (3.a) et (3.b) sont présentées graphiquement sur les figures 5 et 6, respectivement pour $m=1$ (dispositif bistable par cassure d'ancrage) et $m=2$ (dispositif bistable en volume) par les points d'intersection des deux familles de courbes. Dans les deux cas il existe un nombre infini de solutions $(\Delta\Phi_0, \xi_0)$ qui optimisent l'optique du dispositif en lumière monochromatique, assurant une luminosité 100% et un contraste infini. Pour $\Delta n$ et $\lambda_0$ fixes, ces solutions correspondent à des épaisseurs croissantes et par ce critère la solution optimale est le point 1 sur les figures 5 et 6, qui correspond à $\xi \cong 0,25$ et donc à une épaisseur minimale. Cette épaisseur est deux fois plus petite que la valeur optimale d'un afficheur bistable en transmission $(\xi \cong 0,5)$. Le dispositif conforme à la présente invention permet donc de diviser par deux la tension de commande et par quatre les temps de relaxation en absence de champ, par rapport au dispositif en transmission. Toutes les autres solutions correspondent à $\xi > 0,5$ et vont donner des dispositifs plus lents et avec des champs de commande plus élevés.

A cause des tolérances de production, les valeurs de $\xi$ (et donc de $d$) et de $\Delta\Phi_0$, dans un dispositif réel, peuvent dévier de leurs valeurs optimales. Il est donc préférable de choisir une solution autour de laquelle la réflectivité des deux états dépend peu des variations de $\xi$ et de $\Delta\Phi_0$.

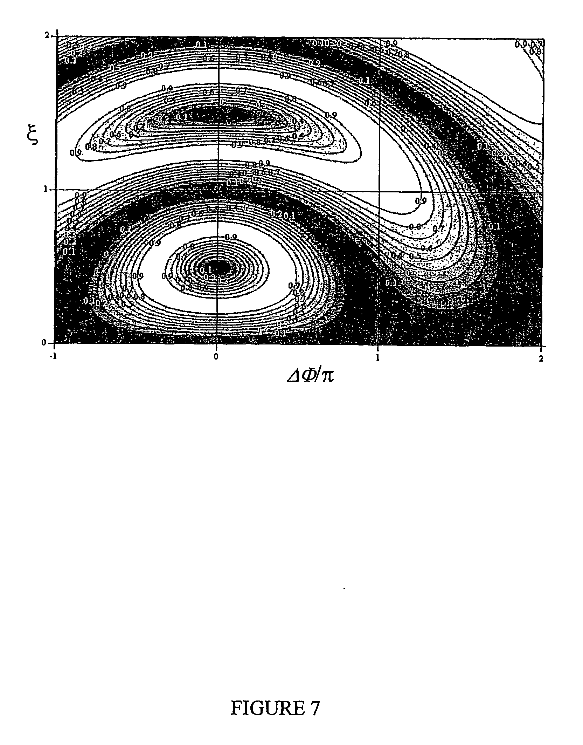

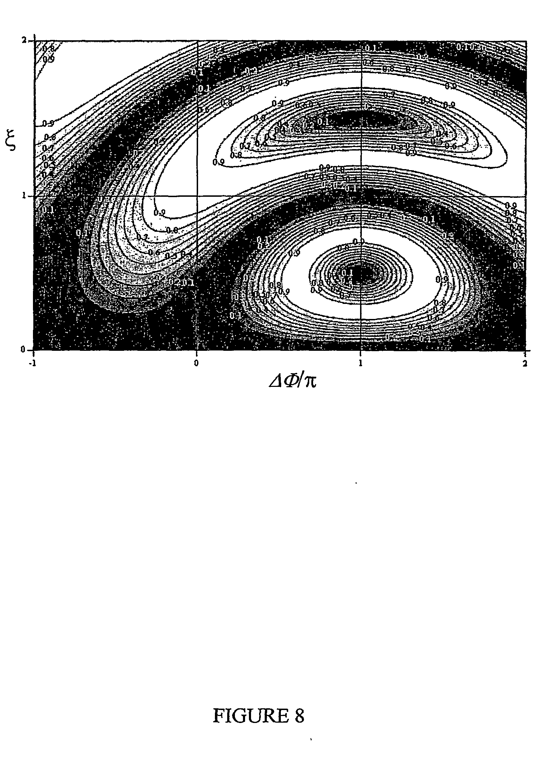

Les Figures 7 et 8 présentent les variations de réflectivités pour les deux textures bistables, de torsion $\Delta\Phi_0$ et $\Delta\Phi_0 - \pi$ , en fonction de $\Delta\Phi_0$ et de $\xi$. La variation de l'état blanc autour du point 1 est comparable avec celle autour des autres solutions possibles (figure 7). La variation de l'état noir autour de la solution 1 (figure 8) est beaucoup plus faible que près des autres solutions; cette solution est la seule qui permet de conserver un bon contraste même dans le cas de larges tolérances de $d$ et $\Delta\Phi_0$. La même conclusion est valable pour les autres textures fortement tordues possibles $\Delta\Phi_0 \pm m\pi$, $m=1,2$. On voit donc qu'en lumière monochromatique les paramètres qui optimisent le dispositif bistable proposé dans la présente invention sont $d.\Delta n/\lambda_0 \cong 0,25$ et $|\Delta\Phi_0| \cong 6°$, presque les mêmes pour les torsions supplémentaires de $\pi$ et de $2\pi$. En plus, dans ce cas les propriétés optiques du dispositif ne dépendent pas de l'orientation P du polariseur 10 par rapport au directeur du cristal liquide 40.

En lumière blanche, $\xi$ et le déphasage $\delta$ du compensateur 20 sont des fonctions de $\lambda$ et la condition $\delta(\lambda)=90°$ est impossible à satisfaire pour toutes les longueurs d'onde. Pour calculer la réponse optique du dispositif en lumière blanche on choisit ses paramètres optimaux $\xi_0(\lambda_0)=d.\Delta n/\lambda_0 \cong 0,25$ et $|\Delta\Phi_0| \cong 6°$ pour une longueur d'onde fixe $\lambda_0$. En première approximation on suppose que la biréfringence $\Delta n$ du cristal liquide 40 et du compensateur 20 varient lentement avec $\lambda$.

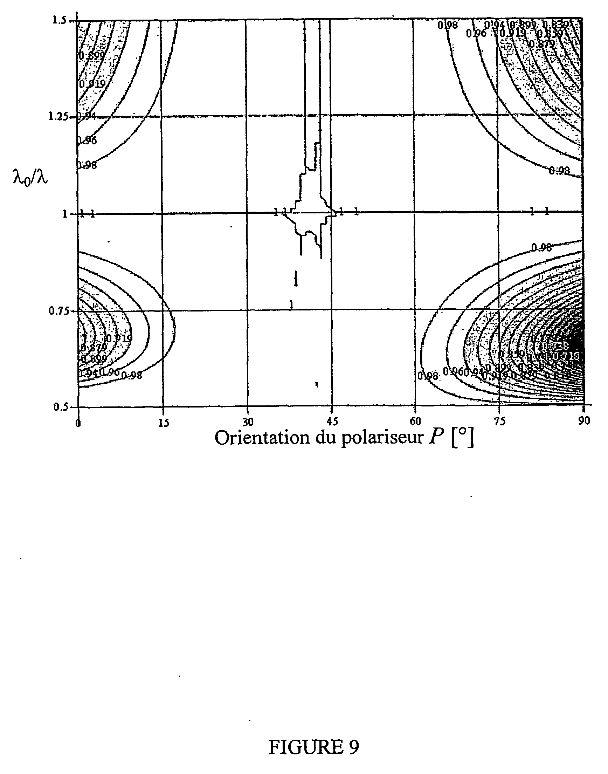

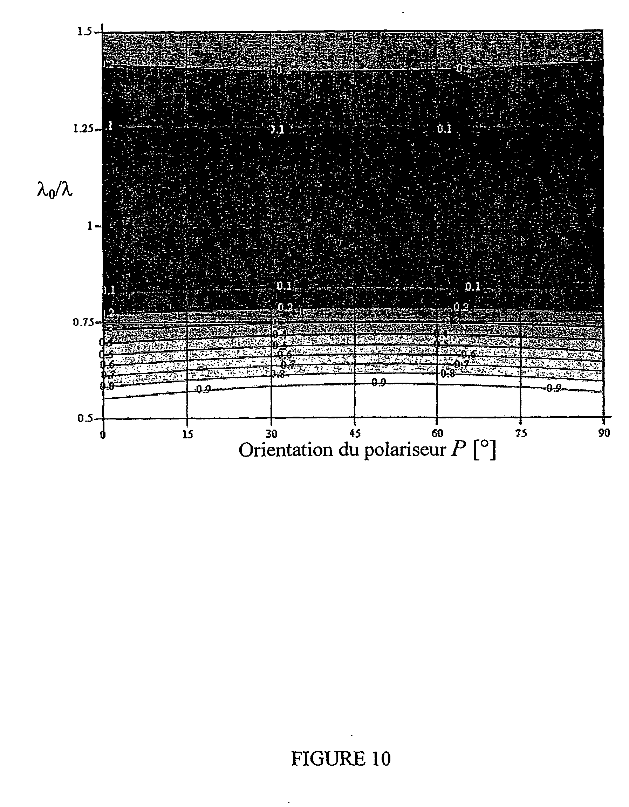

Sur les figures 9 et 10 sont présentées les réflectivités des deux états bistables, calculés à partir de l'équation (1) en fonction de $P$ et de $\lambda/\lambda_0$.

On voit que dans une très large plage de longueurs d'ondes l'état clair (figure 9) garde une réflectivité $R(\Delta\Phi_0) \cong 1$. Cette propriété très favorable est due à la compensation des dispersions du compensateur 20 et du cristal liquide 40. Elle est optimale pour le point 1 de la figure 5, proposé dans la présente invention pour optimiser le dispositif bistable en réflexion. Il faut noter qu'en lumière blanche la luminosité de l'état clair dépend de $P$. L'orientation optimale du polariseur 10 est atteinte dans une large plage autour de $P=45°$ ($15°<P<75°$). L'état noir varie plus (dans cet état la dispersion du compensateur 20 n'est pas compensée par celle du cristal liquide 40), mais la réflectivité reste proche de zéro dans une plage raisonnable de valeurs de $\lambda_0/\lambda$, permettant un bon contraste en lumière blanche. Le choix judicieux de la dispersion du compensateur 20 peut permettre dans ce cas une amélioration supplémentaire du contraste.

Une baisse supplémentaire de l'épaisseur optimale du dispositif peut être obtenue si on varie le déphasage de la lame compensatrice 20 autour de 90°.

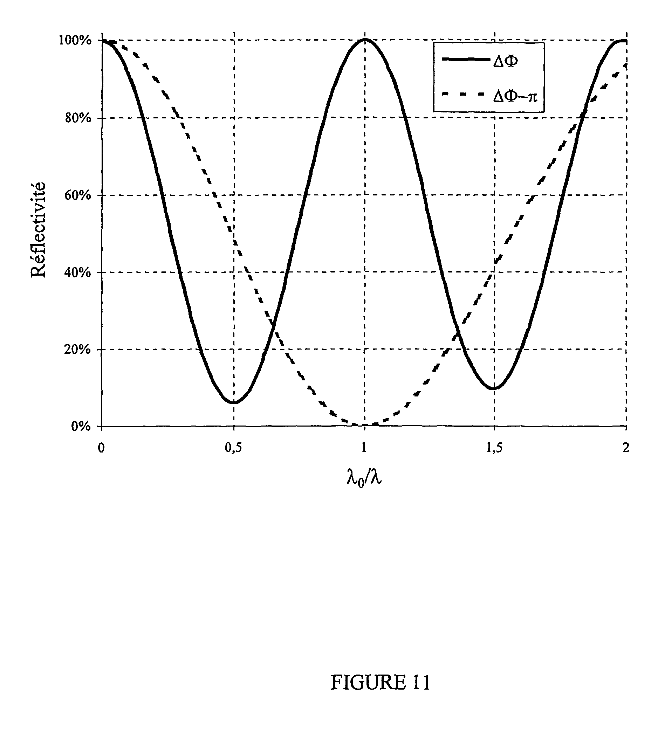

Sur la figure 11, sont présentées les réflectivités des deux états bistables $\Delta\Phi$ et $\Delta\Phi-\pi$ en contraste inversé, calculées en fonction de $\lambda_0/\lambda$ pour $\xi_0=0,215$ , $P=38°$, $\Delta\Phi= -15°$ et $\delta= -85°$. Les valeurs ont été choisies pour optimiser simultanément le contraste et la luminosité de l'afficheur, tout en restant à une épaisseur minimale de la couche de cristal liquide $d=\xi_0/\Delta n\lambda_0$. Des résultats similaires sont obtenus avec $P$ variant entre 15° et 75° avec des valeurs de $\Delta\Phi$ ($P$) proches de celles utilisées dans le cas $\delta(\lambda_0)= 90°$.

Des améliorations supplémentaires (par exemple une baisse de la dispersion de la réflectivité de l'état noir) peuvent être obtenues en utilisant un compensateur 20 avec une faible variation de $\Delta n_c(\lambda)/\lambda$ autour du $\lambda=\lambda_0$. Des résultats très similaires sont obtenus pour toutes les textures de forte torsion envisagées dans la présente invention , $\Delta\Phi \pm m\pi$ avec $m=1,2$.

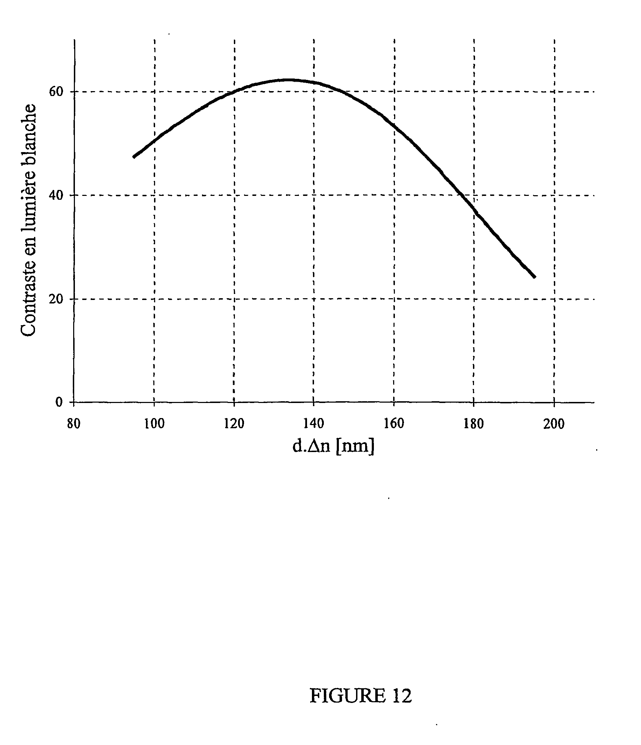

La figure 12 présente le contraste en lumière blanche (pour une source standard de lumière D65), calculé pour un dispositif en contraste inversé, en fonction de l'épaisseur optique $d\Delta n$ intéressante pour de nombreuses applications de la cellule.

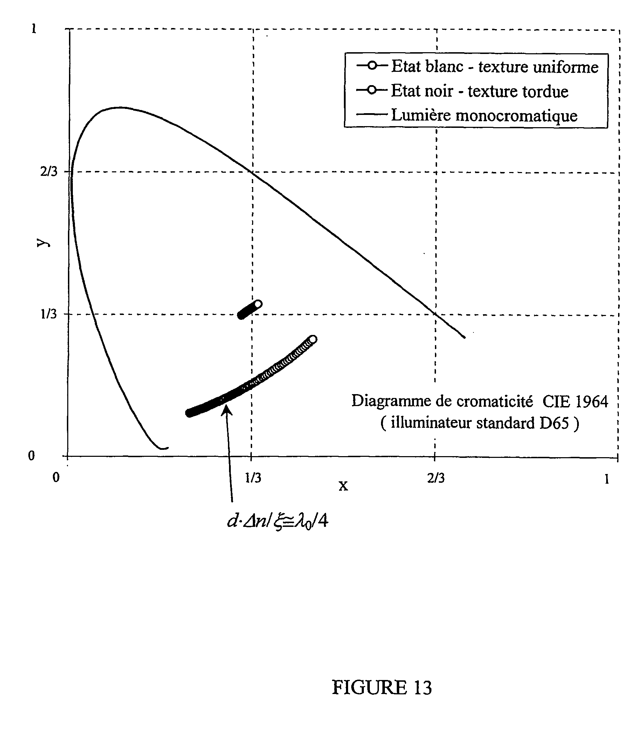

Sur la Figure 13 est présenté le diagramme colorimétrique du dispositif proposé dans la présente invention, en fonction de l'épaisseur $d$ du cristal liquide. L'état clair correspond à une couleur blanche parfaite, indépendante de *d*. La couleur de l'état sombre varie avec d et peut être ajustée en variant ce paramètre sans perte de contraste.

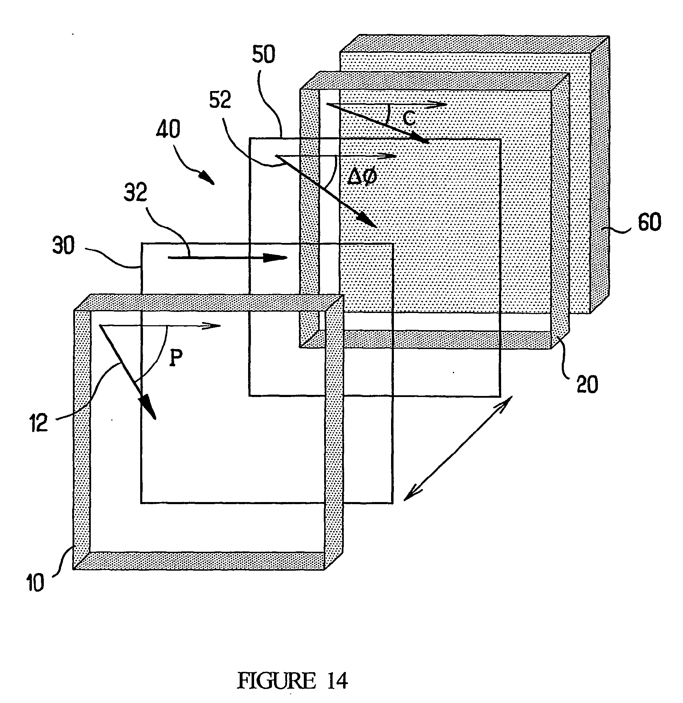

Une autre configuration possible du dispositif est présentée sur la figure 14. Dans ce cas le compensateur 20 est placé entre le cristal liquide 30/40/50 et le miroir 60, orienté à un angle *C* par rapport au directeur de la face avant.

En d'autres termes selon la figure 14, le compensateur 20 est placé non pas en avant de la cellule à cristal liquide, comme sur la figure 1, mais en arrière de cette cellule.

Pour la réflectivité de cette configuration nous obtenons:

$$R(\Delta\Phi)=(\cos\delta\,\cos\varepsilon-\sin\delta\,\sin\varepsilon\,\cos\beta_1)^2+[\cos\delta\,\sin\varepsilon\,\cos\beta_0+\sin\delta\,(\sin\beta_0\sin\beta_1+\cos\varepsilon\,\cos\beta_0\cos\beta_1)]^2$$

où

$$\begin{cases}\beta_0=2P-\alpha\\ \beta_1=2C-\Delta\Phi+\alpha\end{cases} \tag{4}$$

En lumière monochromatique, à $\delta(\lambda_0)=90°$, pour avoir une réflectivité $R(\Delta\Phi_0\pm m\pi)=0$ pour l'état fortement tordu il faut satisfaire les équations

$$\sqrt{(\Delta\Phi_0\pm m\pi)^2+\pi^2\xi^2}=k\pi \tag{5}$$

$$C-P=\pm\frac{\pi}{4}+\Delta\Phi_0-\alpha\cong\pm\frac{\pi}{4}$$

avec $\alpha=\alpha(\Delta\Phi_0\pm m\pi)$.

Simultanément, pour assurer une réflectivité $R(\Delta\Phi_0)=1$ pour l'état tordu il faut satisfaire

$$\sqrt{(\Delta\Phi_0\pm m\pi)^2+\pi^2\xi^2}=k\pi \tag{6}$$

$$P=\pm\frac{\pi}{4}+\frac{\alpha}{2}$$

avec $\alpha=\alpha(\Delta\Phi_0)$.

On voit que ce sont les mêmes conditions que dans les équations (3.a) et (3.b), mais il faut satisfaire aussi deux conditions supplémentaires pour les orientations du polariseur 10 et du compensateur 20 par rapport au cristal liquide 40. La solution optimale correspond toujours au point 1 des figures 5 et 6, qui assure une épaisseur minimale, une variation des propriétés optiques très lente avec $\Delta\Phi_0$ et $\xi$ et une colorimétrie optimale. Cette configuration est donc moins avantageuse que celle de figure 4 (compensateur 20 avant le cristal liquide) parce-qu'elle exige une orientation précise des éléments optiques, difficile à satisfaire simultanément pour toutes les longueurs d'onde (les angles $\alpha$ dépendent de $\lambda$). Elle peut cependant être envisagée pour simplifier la réalisation du dispositif car elle permet de placer ensemble le miroir 60 et le compensateur 20.

Bien entendu la présente invention n'est pas limitée aux modes de réalisation particuliers, qui viennent d'être décrits, mais s'étend à toutes variantes conformes à son esprit.

[1] EP-A-0 018 180

[2] FR-A-2 740 894

[3] SID **99**, « Reflective Single-Polarizer Bistable Nematic Liquid Crystal Display with Optimum Twist » Y. J. KIM et al

[4] J. Appl. Phys. Vol. 37 (1998) « Reflective Bistable Twisted Nematic Liquid Crystal Display » Z. L. Xie et al

[5] Journal of Applied Physics « optimization of reflective bistable twisted nematic liquid crystal displays » Z. L. Xie et al
[6] Appl. Phys. Lett. **51** (18) nov 1987 « Optical properties of general twisted nematic liquid-crystal displays » H. L. Ong

**Revendications**

1. Dispositif bistable d'affichage en réflexion comprenant :

   a) un matériau cristal liquide (40) contenu entre deux substrats parallèles (30, 50), munis d'électrodes sur leurs surfaces intérieures en regard, pour permettre d'appliquer un champ électrique sur le dit cristal liquide, au moins le substrat frontal (30) et l'électrode frontale étant optiquement transparents,
   b) des couches ou des traitements d'alignement sur les électrodes, qui orientent le cristal liquide et permettent la réalisation alternative d'au moins deux textures distinctes stables ou métastables en absence de champ, où une des textures est soit non-tordue, soit tordue à un angle total compris entre -90° et +90°, et l'autre texture possible présente une torsion supplémentaire à gauche ou à droite d'un angle essentiellement multiple entier de 180°,
   c) l'épaisseur d de la couche de cristal liquide (40) étant choisie telle que le produit $d.\Delta n$ est proche de $\lambda_0/4$, où $\lambda_0$ est la longueur d'onde médiane de la bande spectrale utile de l'afficheur et $\Delta n$ est la biréfringence du cristal liquide pour cette longueur d'onde,
   d) des moyens conçus pour appliquer, sur le cristal liquide, des signaux électriques qui permettent de commuter entre les dites textures distinctes et de rester dans l'une d'entre-elles après l'enlèvement du champ,
   e) un polariseur (10), associé à la face avant du dispositif, placé à l'intérieur ou à l'extérieur de celui-ci,
   f) un élément (60) réflectif, spéculaire ou diffusant, placé sur la face arrière du cristal liquide, à l'intérieur ou à l'extérieur du dispositif, permettant à la lumière de passer deux fois dans le dispositif et de retourner vers l'observateur ou vers des éléments optiques supplémentaires, et **caractérisé par le fait qu'**il comprend
   g) un compensateur (20), placé entre le polariseur et l'élément réflectif, avec un retard optique $d_c \Delta n_c$ proche de $\lambda_0/4$.

2. Dispositif selon la revendication 1, **caractérisé par le fait que** le matériau cristal liquide (30) comprend un cristal liquide ou un mélange de cristal liquide dans une phase nématique.

3. Dispositif selon la revendication 1, **caractérisé par le fait que** le matériau cristal liquide (30) comprend un cristal liquide ou un mélange de cristal liquide dans une phase cholestérique ou nématique dopée par une substance chirale, pour permettre de rapprocher ou d'égaliser les énergies de certaines textures parmi les textures stables ou métastables.

4. Dispositif selon l'une des revendications 1 à 3, **caractérisé par le fait que** le cristal liquide, les couches d'alignement et les moyens conçus pour appliquer le champ sont choisis pour permettre la commutation sous champ par cassure d'ancrage ou par propagation des défauts entre deux textures, bistables ou métastables en absence de champ, et la différence des angles de torsion totale dans ces deux textures est essentiellement proche de 180°.

5. Dispositif selon l'une des revendications 1 à 3, **caractérisé par le fait que** le cristal liquide, les couches d'alignement et les moyens conçus pour appliquer le champ sont choisis pour permettre la commutation sous champ par cassure d'ancrage, par distorsion continue dans le volume ou par propagation des défauts entre deux textures, bistables ou métastables en absence de champ, et la différence des angles de torsion totale dans ces deux textures est essentiellement proche de 360°.

6. Dispositif selon l'une des revendications 1 à 5, **caractérisé par le fait que** la lame compensatrice (20) est placée entre le polariseur (10) et le cristal liquide (40).

7. Dispositif selon l'une des revendications 1 à 5, **caractérisé par le fait que** la lame compensatrice (20) est placée entre le cristal liquide (40) et l'élément réflectif (60).

8. Dispositif selon l'une des revendications 1 à 7, **caractérisé par le fait que** la lame compensatrice (20) introduit un retard optique $\Delta l$ compris entre $0,15 \cdot \lambda_0 \div 0,35 \cdot \lambda_0$, où $\lambda_0$ est la longueur d'onde médiane de la bande spectrale utile.

9. Dispositif selon l'une des revendications 1 à 8, **caractérisé par le fait que** la lame compensatrice (20) est orientée à un angle compris entre 35° et 55° par rapport au polariseur (10).

**10.** Dispositif selon l'une des revendications 1 à 9, **caractérisé par le fait que** la lame compensatrice (20) est orientée à un angle proche de 45° par rapport au polariseur (10).

**11.** Dispositif selon l'une des revendications 1 à 10, **caractérisé par le fait que** le retard optique $d \Delta n$ de la couche cristal liquide (40) est dans les limites $0{,}15 \cdot \lambda_0 \div 0{,}35 \cdot \lambda_0$, préférentiellement $0{,}20 \cdot \lambda_0 \div 0{,}32 \cdot \lambda_0$, où $\lambda_0$ est la longueur d'onde médiane de la bande spectrale utile.

**12.** Dispositif selon l'une des revendications 1 à 11, **caractérisé par le fait que** le polariseur (10) est un polariseur linéaire ou elliptique.

**13.** Dispositif selon l'une des revendications 1 à 12, **caractérisé par le fait que** au moins une des électrodes contient plusieurs segments différents pour permettre de réaliser plusieurs éléments d'image (pixels) indépendants sur les mêmes substrats et dans le même dispositif.

**14.** Dispositif selon l'une des revendications 1 à 13, **caractérisé par le fait que** les éléments d'image (pixels) indépendants sont munis des moyens indépendants pour appliquer le champ.

**15.** Dispositif selon l'une des revendications 1 à 14, **caractérisé par le fait que** les éléments d'image (pixels) indépendants sont organisés dans une matrice passive multiplexée.

**16.** Dispositif selon l'une des revendications 1 à 15, **caractérisé par le fait que** les éléments d'image (pixels) indépendants sont organisés dans une matrice active multiplexée.

**17.** Dispositif selon l'une des revendications 1 à 16, **caractérisé par le fait que** le polariseur (10) est orienté à un angle proche de 45° par rapport au directeur du cristal liquide sur la face avant du dispositif.

**18.** Dispositif selon l'une des revendications 1 à 17, **caractérisé par le fait qu'**il est optimisé, quant à l'angle de torsion ($\Delta \Phi_0$) de la texture dans l'état de faible torsion, la torsion supplémentaire $\pm m\pi$ dans le deuxième état bistable (où $m$ est un nombre entier), l'orientation ($P$) du polariseur (10) par rapport à l'alignement du cristal liquide (40) sur la face avant (30), l'épaisseur ($d$) du matériau cristal liquide (40) placé entre les deux substrats (30, 50) et la biréfringence ($\Delta n$) du cristal liquide de façon à obtenir des performances optiques optimales, notamment contraste, luminance, colorimétrie.

**19.** Dispositif selon l'une des revendications 1 à 18, **caractérisé par le fait que** l'axe optique de la lame compensatrice (20) est orienté sensiblement à 45° par rapport au polariseur (10).

**20.** Dispositif selon l'une des revendications 1 à 19, **caractérisé par le fait que** la lame compensatrice (20) introduit un retard optique compris entre 100 nm et 180 nm.

**21.** Dispositif selon l'une des revendications 1 à 20, **caractérisé par le fait que** le polariseur (10) est combiné avec la lame compensatrice (20) sous forme d'un élément unique pour réaliser un polariseur elliptique.

**22.** Dispositif selon l'une des revendications 1 à 21, **caractérisé par le fait que** l'épaisseur du matériau cristal liquide (40) est inférieure à 6 $\mu$m.


**Claims**

**1.** A reflective bistable display device comprising:

a) a liquid crystal material (40) contained between two parallel substrates (30, 50) having electrodes on their facing inside surfaces to apply an electric field to said liquid crystal, at least the front substrate (30) and the front electrode being optically transparent;
b) alignment layers or treatments on the electrodes to orient the liquid crystal and enable at least two distinct stable or metastable textures to be implemented alternatively in the absence of a field, where one of the textures is either non-twisted, or else twisted at a total angle lying in the range -90° to +90°, and the other possible texture presents additional twist to left or to right through an angle that is essentially an integer multiple of 180°;
c) the thickness $\underline{d}$ of the liquid crystal layer (40) being selected in such a manner that the product d·$\Delta$n is close

to $\lambda_0/4$, where $\lambda_0$ is the center wavelength of the working spectrum band of the display and $\Delta n$ is the birefringence of the liquid crystal for said wavelength;

d) means designed to apply electrical signals to the liquid crystal enabling it to switch between said two distinct textures and to remain in one or other of them after the field has been removed;

e) a polarizer (10) associated with the front face of the device, placed inside or outside the device; and

f) a specular or diffusing reflective element (60) placed at the rear face of the liquid crystal, inside or outside the device, enabling light to pass twice through the device and return towards an observer or towards additional optical elements;

the device being **characterized by** the fact that it further comprises:

g) a compensator (20) placed between the polarizer and the reflective element, the compensator presenting an optical delay $d_c \cdot \Delta n_c$ that is close to $\lambda_0/4$.

2. A device according to claim 1, **characterized by** the fact that the liquid crystal material (30) comprises a liquid crystal or a liquid crystal mixture in a nematic phase.

3. A device according to claim 1, **characterized by** the fact that the liquid crystal material (30) comprises a liquid crystal or a liquid crystal mixture in a cholesteric or nematic phase doped by a chiral substance to enable the energies of certain textures amongst textures that are stable or metastable to be brought close together or equalized.

4. A device according to any one of claims 1 to 3, **characterized by** the fact that the liquid crystal, the alignment layers, and the means for applying the field are selected to enable switching under a field to be performed by breaking anchoring or by propagating defects between two textures that are bistable or metastable in the absence of a field, with the difference between the total twist angles in said two textures being essentially close to 180°.

5. A device according to any one of claims 1 to 3, **characterized by** the fact that the liquid crystal, the alignment layers, and the means for applying the field are selected in such a manner as to enable switching under a field to be performed by breaking anchoring, by in-volume continuous distortion, or by propagating faults between two textures that are bistable or metastable in the absence of a field, and the difference in total twist angles with these two textures is essentially close to 360°.

6. A device acorn to any one of claims 1 to 5, **characterized by** the fact that the compensating plate (20) is placed between the polarizer (10) and the liquid crystal (40).

7. A device according to any one of claims 1 to 5, **characterized by** the fact that the compensating plate (20) is placed between the liquid crystal (40) and the reflective element (60).

8. A device according to any one of claims 1 to 7, **characterized by** the fact that the compensating plate (20) introduces an optical delay $\Delta l$ lying in the range $0.15\lambda_0$ to $0.35\lambda_0$, where $\lambda_0$ is the center wavelength of the working spectrum band.

9. A device according to any one of claims 1 to 8, **characterized by** the fact that the compensating plate (20) is oriented at an angle lying in the range 35° to 55° relative to the polarizer (10).

10. A device according to any one of claims 1 to 9, **characterized by** the fact that the compensating plate (20) is oriented at an angle close to 45° relative to the polarizer (10).

11. A device according to any one of claims 1 to 10, **characterized by** the fact that the optical delay $d.\Delta n$ of the liquid crystal layer (40) lies in the range $0.15\lambda_0$ to $0.35\lambda_0$, and preferably in the range $0.20\lambda_0$ to $0.32\lambda_0$, where $\lambda_0$ is the center wavelength of the working spectrum band.

12. A device according to any one of claims 1 to 11, **characterized by** the fact that the polarizer (10) is a linear or an elliptical polarizer.

13. A device according to any one of claims 1 to 12, **characterized by** the fact that at least one of the electrodes contains a plurality of different segments in order to enable a plurality of independent pixels to be implemented on the same substrates and in the same device.

14. A device according to any one of claims 1 to 13, **characterized by** the fact that the independent pixels are provided with independent means for applying the field.

**15.** A device according to any one of claims 1 to 14, **characterized by** the fact that the independent pixels are organized in a multiplexed passive matrix.

**16.** A device according to any one of claims 1 to 15, **characterized by** the fact that the independent pixels are organized in a multiplexed active matrix.

**17.** A device according to any one of claims 1 to 16, **characterized by** the fact that the polarizer (10) is oriented at an angle close to 45° relative to the director of the liquid crystal on the front face of the device.

**18.** A device according to any one of claims 1 to 17, **characterized by** the fact that the twist angle ($\Delta\phi_0$) of the texture in the low twist state, the additional twist $\pm m\pi$ in the second bistable state (where $\underline{m}$ is an integer), the orientation (P) of the polarizer (10) relative to the alignment of the liquid crystal (40) on the front face (30), the thickness ($\underline{d}$) of the liquid crystal material (40) placed between the two substrates (30, 50), and the birefringence ($\Delta n$) of the liquid crystal are optimized in such a manner as to obtain optimum optical performance, in particular in terms of contrast, brightness, and color.

**19.** A device according to any one of claims 1 to 18, **characterized by** the fact that the optical axis of the compensating plate (20) is oriented at substantially 45° relative to the polarizer (10).

**20.** A device according to any one of claims 1 to 19, **characterized by** the fact that the compensating plate (20) introduces an optical delay lying in the range 100 nm to 180 nm.

**21.** A device according to any one of claims 1 to 20, **characterized by** the fact that the polarizer (10) is combined with the compensating plate (20) in the form of a single element to constitute an electrical polarizer.

**22.** A device according to any one of claims 1 to 21, **characterized by** the fact that the thickness of the liquid crystal material (40) is less than 6 $\mu$m.

**Patentansprüche**

**1.** Vorrichtung zur bistabilen Reflexionsanzeige, die folgendes umfaßt:

a) ein Flüssigkristallmaterial (40), das sich zwischen zwei parallelen Substraten (30, 50) befindet, die auf ihren inneren gegenüberstehenden Flächen mit Elektroden ausgestattet sind, um es zu gestatten, auf den Flüssigkristall ein elektrisches Feld anzuwenden, wobei wenigstens das vordere Substrat (30) und die vordere Elektrode optisch transparent sind,

b) Schichten oder Behandlungen zur Ausrichtung auf den Elektroden, die den Flüssigkristall orientieren und die die alternative Realisierung wenigstens zweier unterschiedlicher Texturen gestatten, die in Abwesenheit eines Feldes stabil oder metastabil sind, wobei eine der Texturen entweder nicht gedreht ist oder mit einem Gesamtwinkel zwischen -90° und +90° gedreht ist und die andere mögliche Textur eine zusätzliche Verdrehung nach links oder rechts um einen Winkel aufweist, der im wesentlichen ein ganzzahliges Vielfaches von 180° ist,

c) die Dicke d der Flüssigkristallschicht (40) ist so gewählt, daß das Produkt $d \cdot \Delta n$ nahe bei $\lambda_0/4$ liegt, wobei $\lambda_0$ die mittlere Wellenlänge des Spektrutznutzbereichs der Anzeigevorrichtung und $\Delta n$ die Doppelbrechung des Flüssigkristalls für diese Wellenlänge ist,

d) Mittel, die dafür konzipiert sind, auf den Flüssigkristall elektrische Signale anzuwenden, die es gestatten, zwischen den unterschiedlichen Texturen umzuschalten und nach dem Abschalten des Felds in einer von diesen zu bleiben,

e) einen Polarisator (10), der der Vorderseite der Vorrichtung zugeordnet ist und innerhalb oder außerhalb von dieser angeordnet ist,

f) ein reflektierendes Element (60), das spiegelnd oder diffus streuend ist und das auf der Rückseite des Flüssigkristalls angeordnet ist, innerhalb oder außerhalb der Vorrichtung, das es ermöglicht, daß das Licht zweimal durch die Vorrichtung läuft und in Richtung des Betrachters oder in Richtung zusätzlicher optischer Elemente zurückläuft, und

die **dadurch gekennzeichnet ist, daß** sie folgendes umfaßt:

g) einen Kompensator (20), der zwischen dem Polarisator und dem reflektierenden Element angeordnet ist, mit einer optischen Verzögerung $d_c\Delta n_c$, die nahe bei $\lambda_0/4$ liegt.

**2.** Vorrichtung nach Anspruch 1, **dadurch gekennzeichnet, daß** das Flüssigkristallmaterial (30) ein Flüssigkristall oder eine Flüssigkristallmischung in einer nematischen Phase umfaßt.

**3.** Vorrichtung nach Anspruch 1, **dadurch gekennzeichnet, daß** das Flüssigkristallmaterial (30) ein Flüssigkristall oder eine Flüssigkristallmischung in einer cholesterischen oder nematischen Phase, dotiert mit einer chiralen Substanz, umfaßt, um es zu gestatten, die Energien bestimmter Texturen unter den stabilen oder metastabilen Texturen anzunähern oder anzugleichen.

**4.** Vorrichtung nach einem der Ansprüche 1 bis 3, **dadurch gekennzeichnet, daß** der Flüssigkristall, die Ausrichtungsschichten und die zur Anwendung des Felds konzipierten Mittel so gewählt sind, daß sie die Umschaltung im Feld durch Aufbrechen der Verankerung oder durch Fortpflanzung von Fehlern zwischen zwei Texturen gestatten, die in Feldabwesenheit bistabil oder metastabil sind, und wobei die Gesamtdifferenz der Torsionswinkel in diesen beiden Texturen im wesentlichen nahe bei 180° liegt.

**5.** Vorrichtung nach einem der Ansprüche 1 bis 3, **dadurch gekennzeichnet, daß** der Flüssigkristall, die Ausrichtungsschichten und die zur Anwendung des Felds konzipierten Mittel so gewählt sind, daß sie die Umschaltung im Feld durch Aufbrechen der Verankerung, durch kontinuierliches Verdrehen im Volumen oder durch Fortpflanzung von Fehlern zwischen zwei Texturen gestatten, die in Feldabwesenheit bistabil oder metastabil sind, und wobei die Gesamtdifferenz der Torsionswinkel in diesen beiden Texturen im wesentlichen nahe bei 360° liegt.

**6.** Vorrichtung nach einem der Ansprüche 1 bis 5, **dadurch gekennzeichnet, daß** das Kompensatorplättchen (20) zwischen dem Polarisator (10) und dem Flüssigkristall (40) angeordnet ist.

**7.** Vorrichtung nach einem der Ansprüche 1 bis 5, **dadurch gekennzeichnet, daß** das Kompensatorplättchen (20) zwischen dem Flüssigkristall (40) und dem reflektierenden Element (60) angeordnet ist.

**8.** Vorrichtung nach einem der Ansprüche 1 bis 7, **dadurch gekennzeichnet, daß** das Kompensatorplättchen (20) eine optische Verzögerung $\Delta l$ bewirkt, die zwischen $0,15 \cdot \lambda_0 \div 0,35 \cdot \lambda_0$ liegt, wobei $\lambda_0$ die mittlere Wellenlänge des Spektralnutzbereichs ist.

**9.** Vorrichtung nach einem der Ansprüche 1 bis 8, **dadurch gekennzeichnet, daß** das Kompensatorplättchen (20) in einem Winkel orientiert ist, der zwischen 35° und 55° in Bezug auf den Polarisator (10) liegt.

**10.** Vorrichtung nach einem der Ansprüche 1 bis 9, **dadurch gekennzeichnet, daß** das Kompensatorplättchen (20) in einem Winkel orientiert ist, der nahe bei 45° in Bezug auf den Polarisator (10) liegt.

**11.** Vorrichtung nach einem der Ansprüche 1 bis 10, **dadurch gekennzeichnet, daß** die optischen Verzögerung $d\Delta n$ der Flüssigkristallschicht (40) zwischen $0,15 \cdot \lambda_0 \div 0,35 \cdot \lambda_0$ und vorzugsweise zwischen $0,20 \cdot \lambda_0 \div 0,32 \cdot \lambda_0$ liegt, wobei $\lambda_0$ die mittlere Wellenlänge des Spektralnutzbereichs ist.

**12.** Vorrichtung nach einem der Ansprüche 1 bis 11, **dadurch gekennzeichnet, daß** der Polarisator (10) ein linearer oder elliptischer Polarisator ist.

**13.** Vorrichtung nach einem der Ansprüche 1 bis 12, **dadurch gekennzeichnet, daß** wenigstens eine der Elektroden mehrere verschiedene Segmente umfaßt, um die Realisierung mehrerer unabhängiger Bildelemente (Pixel) auf denselben Substraten und in derselben Vorrichtung zu gestatten.

**14.** Vorrichtung nach einem der Ansprüche 1 bis 13, **dadurch gekennzeichnet, daß** die unabhängigen Bildelemente (Pixel) mit unabhängigen Mitteln zur Anwendung des Felds ausgestattet sind.

**15.** Vorrichtung nach einem der Ansprüche 1 bis 14, **dadurch gekennzeichnet, daß** die unabhängigen Bildelemente (Pixel) in einer gemultiplexten passiven Matrix organisiert sind.

**16.** Vorrichtung nach einem der Ansprüche 1 bis 15, **dadurch gekennzeichnet, daß** die unabhängigen Bildelemente (Pixel) in einer gemultiplexten aktiven Matrix organisiert sind.

**17.** Vorrichtung nach einem der Ansprüche 1 bis 16, **dadurch gekennzeichnet, daß** der Polarisator (10) in einem Winkel nahe bei 45° in Bezug auf den Direktor des Flüssigkristalls auf der Vorderseite der Vorrichtung orientiert ist.

**18.** Vorrichtung nach einem der Ansprüche 1 bis 17, **dadurch gekennzeichnet, daß** sie bezüglich des Torsionswinkels ($\Delta\Phi_0$) der Textur im Zustand schwacher Torsion, der zusätzlichen Torsion $\pm m\pi$ im zweiten bistabilen Zustand (wobei m ganzzahlig ist), der Orientierung (P) des Polarisators (10) in Bezug auf die Ausrichtung des Flüssigkristalls (40) auf der Vorderseite (30), der Dicke (*d*) des zwischen den beiden Substraten (30, 50) angeordneten Flüssigkristallmaterials (40) und der Doppelbrechung ($\Delta n$) des Flüssigkristalls so optimiert ist, daß eine optimale optische Leistung erreicht wird, insbesondere im Kontrast, der Helligkeit und den Farbeigenschaften.

**19.** Vorrichtung nach einem der Ansprüche 1 bis 18, **dadurch gekennzeichnet, daß** die optische Achse des Kompensatorplättchens (20) in Bezug auf den Polarisator (10) im wesentlichen mit 45° orientiert ist.

**20.** Vorrichtung nach einem der Ansprüche 1 bis 19, **dadurch gekennzeichnet, daß** das Kompensatorplättchen (20) eine optische Verzögerung zwischen 100 nm und 180 nm bewirkt.

**21.** Vorrichtung nach einem der Ansprüche 1 bis 20, **dadurch gekennzeichnet, daß** der Polarisator (10) mit dem Kompensatorplättchen (20) in Form eines einzigen Elements kombiniert ist, um einen elliptischen Polarisator zu realisieren.

**22.** Vorrichtung nach einem der Ansprüche 1 bis 21, **dadurch gekennzeichnet, daß** die Dicke des Flüssigkristallmaterials (40) unter 6 $\mu$m liegt.

$T_0$ $T_{360}$ $T_{180}$

FIGURE 1

$T_0$        H        $T_{180}$

$\vec{E}$

FIGURE 2

FIGURE 3

FIGURE 4

FIGURE 5

FIGURE 6

FIGURE 7

FIGURE 8

FIGURE 9

FIGURE 10

FIGURE 11

FIGURE 12

$d \cdot \Delta n / \xi \cong \lambda_0 / 4$

FIGURE 13

FIGURE 14